# EUROPEAN PATENT APPLICATION

(11) **EP 4 838 193 A1**
(43) Date of publication of application: **11.11.2026**
(21) Application number: 26172146.8
(22) Date of filing: 14.04.2026
(51) Int. Cl.: G01M 3/40, G01N 27/20

(54) **TESTING A PACKAGE**

(30) Priority: 05.05.2025 EP 25174148
(71) Applicant: Tetra Laval Holdings & Finance S.A., 1009 Pully (CH)
(72) Inventor: Hallstadius, Hans, 221 86 Lund (SE); Hallstadius, Oscar, 221 86 Lund (SE)
(74) Representative: Tetra Pak Patent Attorneys

(57) **Abstract**

It is provided a method for testing a liquid food package (10). The method is performed by a testing device (1). The method comprises: applying (40) a first voltage between a first electrode (2) and a second electrode (3), wherein the first electrode (2) is in conductive contact with an interior side (17) of the package (10) and the second electrode (6) is in conductive contact with an exterior side (18) of the package (10); measuring (42) a current based on applying the first voltage; determining (44), in response to measured current being greater than a threshold current, that the package is leaking; and applying (46), in response to measured current being less than the threshold current, a successively increasing voltage between the first electrode (2) and the second electrode (3) for determining a dielectric breakdown voltage at which the package (10) fails.

## Description

### TECHNICAL FIELD

The present disclosure relates to the field of food packaging and in particular to testing such a package, e.g. for leaks.

### BACKGROUND

Food-and-beverage producers routinely verify package tightness to prevent microbial ingress, product loss, and shelf-life reduction. A known procedure for leakage control for multilayer board-based cartons involves exposing the filled package sample to a coloured ink or dye. Penetration of the dye highlights if there is a leak in the package.

More recently, a ramping high-voltage (RHV) method has been introduced. In an RHV test, the package is placed between two electrodes: one electrode in conductive contact with the interior of the package the other electrode in conductive contact with the exterior of the package. A voltage between the two electrodes is ramped from a low starting value toward a predetermined maximum. If the package is intact, the voltage eventually reaches a level at which electrical breakdown occurs through the polymer layer, producing a breakdown voltage that correlates with the minimum polymer thickness. If the package contains a leak, the applied voltage quickly collapses toward zero, allowing identification of leaking sample packages.

RHV testing therefore offers a combination of high sensitivity (capable of detecting sub-millimetre defects) and quantitative feedback on barrier thickness, while avoiding the mess and downtime associated with ink-based tests. Nonetheless, existing RHV systems have recognised limitations, such as signal noise at low voltages and a reliance on operator interpretation of voltage curves to determine whether a package is leaking or intact. This can result in inconsistent test outcomes, particularly for small leaks or marginal defects.

### SUMMARY

One object is to improve quality control of packaging.

According to a second aspect, it is provided a method for testing a liquid food package. The method is performed by a testing device. The method comprises: applying a first voltage between a first electrode and a second electrode, wherein the first electrode is in conductive contact with an interior side of the package and the second electrode is in conductive contact with an exterior side of the package; measuring a current based on applying the first voltage; determining, in response to measured current being greater than a threshold current, that the package is leaking; and applying, in response to measured current being less than the threshold current, a successively increasing voltage between the first electrode and the second electrode for determining a dielectric breakdown voltage at which the package fails.

The first electrode may in conductive contact with a liquid on an interior side of, and in contact with, the package and the second electrode is in conductive contact with a liquid on an exterior side of, and in contact with, the package.

The measuring the current may comprise storing a plurality of current samples over time, in which case the applying a successively increasing voltage comprises storing a plurality of measured voltage samples over time.

The method may further comprise: classifying the package into one of a predetermined number of classes based on the current samples and, when available, the voltage samples.

The classifying may comprise classifying based on providing the measured current and, when available, the dielectric breakdown voltage to a pre-trained machine-learning model.

The predetermined number of classes may comprise a first class for indicating a leak, a second class for indicating a valid dielectric breakdown voltage, and a third class for indicating an operator error.

The applying a first voltage may be performed for a predetermined duration before performing the measuring the current.

The package may include a multi-layer structure, and the dielectric breakdown voltage is used to estimate thickness or integrity of at least one polymer layer in the multi-layer polymeric structure.

According to a second aspect, it is provided a testing device for testing a package. The testing device comprises: processing circuitry; and memory circuitry storing instructions that, when executed by the processing circuitry, cause the testing device to: apply a first voltage between a first electrode and a second electrode, when the first electrode is configured to be in conductive contact with an interior side of the package and the second electrode is configured to be in conductive contact with an exterior side of the package; measure a current based on applying the first voltage; determine, in response to measured current being greater than a threshold current, that the package is leaking; and apply, in response to measured current being less than the threshold current, a successively increasing voltage between the first electrode and the second electrode for determining a dielectric breakdown voltage at which the package fails.

The first electrode may be configured to be in conductive contact with a liquid on an interior side of, and in contact with, the package and the second electrode may be configured to be in conductive contact with a liquid on an exterior side of, and in contact with, the package.

The instructions to measure the current may comprise instructions that, when executed by the processing circuitry, cause the testing device to store a plurality of current samples over time, in which case the instructions to apply a successively increasing voltage comprise instructions that, when executed by the processing circuitry, cause the testing device to store a plurality of measured voltage samples over time.

The testing device may further comprise instructions that, when executed by the processing circuitry, cause the testing device to: classify the package into one of a predetermined number of classes based on the current samples and, when available, the voltage samples.

The instructions to classify may comprise instructions that, when executed by the processing circuitry, cause the testing device to classify based on providing the measured current and, when available, the dielectric breakdown voltage to a pre-trained machine-learning model.

The predetermined number of classes may comprise a first class for indicating a leak, a second class for indicating a valid dielectric breakdown voltage, and a third class for indicating an operator error.

According to a third aspect, it is provided a computer program for testing a package. The computer program comprises computer program code which, when executed on a testing device causes the testing device to: apply a first voltage between a first electrode and a second electrode, when the first electrode is in conductive contact with an interior side of the package and the second electrode is in conductive contact with an exterior side of the package; measure a current based on applying the first voltage; determine, in response to measured current being greater than a threshold current, that the package is leaking; and apply, in response to measured current being less than the threshold current, a successively increasing voltage between the first electrode and the second electrode for determining a dielectric breakdown voltage at which the package fails.

According to a fourth aspect, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied.
Figs 2A and 2B schematically illustrate two different package samples, that can be tested in the setup of Fig 1;
Fig 3 is a flow chart illustrating embodiments of methods for testing a package, performed by the testing device of Fig 1;
Figs 4A-C are time-based diagrams illustrating voltage and current profiles during three separate instances of testing a package using embodiments of methods described in connection with Fig 3;
Fig 5 is a schematic diagram illustrating components of the testing device of Fig 1; and
Fig 6 shows one example of a computer program product 90 comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, electrical integrity testing of food packages is provided. A first, comparatively low test voltage is applied between an interior electrode in contact with the exterior of the package and an exterior electrode in contact with the interior of the package. The resulting current is sampled and compared with a predefined threshold so that leaks are conclusively and reliably detected when the current exceeds the threshold. If the measured current is below the threshold, the device subsequently performs a second test stage in which the voltage is ramped upward. When detected, a dielectric breakdown voltage is recorded when electrical failure through the package wall occurs, which yields a quantitative indication of minimum polymer-layer thickness. Optionally, the device stores time-series data for the current and, when generated, the voltage ramp, and executes a machine-learning model that classifies each test result into predetermined categories such as leak, valid breakdown voltage, or operator error, thus enhancing sensitivity, shortening test cycles, and reducing operator subjectivity compared with conventional ramping high-voltage systems.

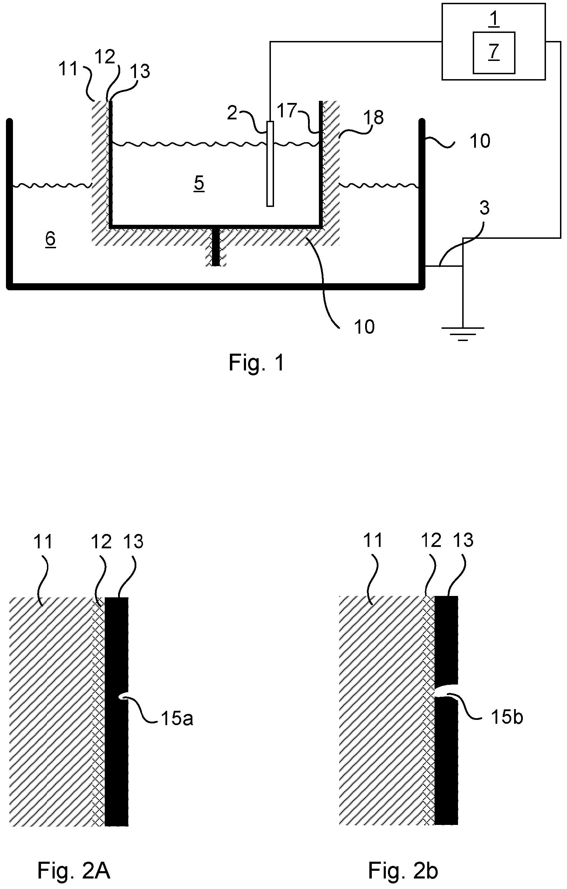

Fig 1 is a schematic diagram illustrating an environment in which embodiments presented herein can be applied. A package 10 is a sample package containing an interior liquid 5 is positioned within a container that holds an exterior liquid 6.

The package 10 is a container configured to hold and protect a food product, such as a liquid product like milk, juice, water, or soup, or a semi-solid or solid product such as tomatoes, beans or other vegetable or protein-based products. The package 10 comprises a multilayer structure that combines mechanical strength with barrier properties against gases, moisture, and light, and includes an inner layer suitable for food contact. Non-limiting examples of such packages include cartons, pouches, caps and bottles formed from laminated paperboard or other combinations of materials. In the illustrated embodiment, the package wall comprises a carton layer 11 providing mechanical strength and a printable surface, a metal layer 12, for example an aluminium layer (e.g. aluminium foil) or other metallised layer, offering additional protection against gases, light, and moisture, and an inner polymer layer 13 forming the sealing and food-contact surface. Other multilayer arrangements, with more or fewer layers may be used, provided that they deliver the required properties for safe and effective food packaging.

The package 10 is arranged such that its outer surface is in conductive contact with the exterior liquid 6, while the interior liquid 5 remains confined within the package. The liquids 5, 6 are conductive, and can, for instance, be provided as a salt water or other suitable test solution.

Prior to testing the package 10 the package can be cut into two halves, where the package 10 of Fig 1 illustrates one half of a full package

A first electrode 2 is positioned on the interior side 17 of the package 10, in conductive contact with the interior liquid 5. A second electrode 3 is positioned on the exterior side 18 of the package 10, in conductive contact with the exterior liquid 6. The second electrode 3 can be connected to ground. In the illustrated example, the package 10 represents a cut section of a complete package, so that the interior side 17 and the exterior side 18 are exposed without the need for any additional openings or seals. There is a seal at the bottom (or elsewhere) of the package 10, here illustrated by a vertical section at the bottom of the package 10. Regardless of the structure of the seal, the cut section of the seal provides a conductive contact between the exterior liquid 6 and the metal layer 12. This arrangement allows controlled electrical contact to the polymer layer 13 from the second electrode 2, and to the metal layer 12 layer from the third electrode, effectively enabling measurement of electrical properties without altering the original structure of the package apart from the cutting operation.

As explained in more detail below, the testing device 1 is configured to test the package 10 in two stages, and optionally classify the package 10 based on the response during the testing. In order to help with the classification, the testing device 1 optionally includes a machine learning model 7, which is trained to classify the package. The machine learning model 7 may be implemented as a trained neural network, decision tree, support vector machine, or other supervised learning algorithm.

While the testing setup in Fig 1 is described with reference to liquids 5, 6 either or both liquids can be omitted as long as the first electrode 2 is in conductive contact with the interior 17 of the package 10 and the second electrode 3 is in conductive contact with the exterior 18 of the package, and thus the metal layer 12 of the multilayer structure of the wall of the package 10.

Figs 2A and 2B schematically illustrate two different package samples, that can be tested in the setup of Fig 1. Both Fig 2A and 2B show a cross-sectional view of a package wall of a package 10 comprising a carton layer 11, a metal layer 12, and an inner polymer layer 13, as also illustrated in Fig 1.

In Fig 2A, a defect 15a is shown as a discontinuity or breach extending through the polymer layer 13. This type of defect may occur during the sealing process or as a result of mechanical damage to the inner surface. Depending on the depth of the defect, this can potentially allow fluid communication between the interior and exterior of the package, resulting in leakage. In the example of Fig 2A, the defect 15a is relatively shallow, whereby no leakage occurs.

In Fig 2B, a different defect 15b is shown as a breach extending through the entire polymer layer 13. This type of defect represents a more severe compromise of the package barrier and is more likely to result in leakage, leading to a risk for microbiological contamination of the food content. Such defects are expected to produce significantly higher current flow during testing, even at low voltages, due to the full penetration of conductive paths through multiple barrier layers.

Figs 2A-B illustrate example defect scenarios that may be detected using the testing methods and devices disclosed herein. Depending on the depth of such defects, the electrical response of the package under test will vary, providing the basis for leak detection or classification.

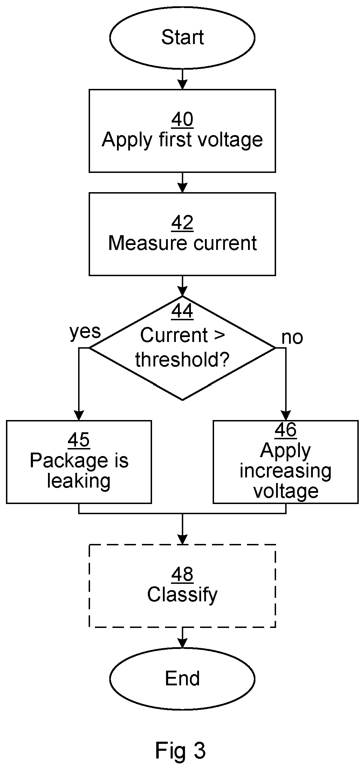

Fig 3 is a flow chart illustrating embodiments of methods for testing a package 10, performed by the testing device 1 of Fig 1.

In an *apply first voltage* step 40, the testing device 1 applies a first voltage between a first electrode 2 and a second electrode 3, wherein the first electrode 2 is in conductive contact with an interior side 17 of the package 10 and the second electrode 3 is in conductive contact with an exterior side 18 of the package 10. In some embodiments, the first electrode 2 is in conductive contact with a liquid 5 on an interior side 17 of, and in contact with, the package 10, and the second electrode 3 is in conductive contact with a liquid 6 on an exterior side 18 of, and in contact with, the package 10.

In a *measure current* step 42, the testing device 1 measures a current based on applying the first voltage, for instance in the range of 50 to 500 volts. In other words, the current resulting from the voltage that is applied between the first electrode 2 and the second electrode 3 is measured. In some embodiments, measuring the current comprises storing a plurality of current samples over time, making up a current curve.

In some implementations, the first voltage applied (in the *apply first voltage* step 40) for a predetermined duration before the measuring of the current in the *measure current* step 42 is carried out.

In a conditional current *> threshold* step 44, the testing device 1 determines whether the measured current is greater than a threshold. The threshold current is a reference value used to distinguish between leaking and non-leaking packages. The threshold current can, for instance, be defined as a current somewhere in the range of 1 to 10 microamperes. If this is the case, this is an indication of a leak, and the method proceeds to a *package* is *leaking* step 45. Otherwise, the method proceeds to an *apply increasing voltage* step 46.

In the *package is leaking* step 45, the testing device 1 outputs a result that the package 10 is leaking. This may involve triggering an indicator or storing a leak indication in memory for later retrieval.

In an *apply increasing voltage* step 46, the testing device 1 applies a successively increasing voltage between the first electrode 2 and the second electrode 3 for determining a dielectric breakdown voltage at which the package 10 fails. In some embodiments, applying the successively increasing voltage comprises storing a plurality of measured voltage samples over time, making up a voltage curve.

In additional embodiments, the package 10 includes a multi-layer structure, and the dielectric breakdown voltage is used to estimate thickness or integrity of the one or more polymer layers between the interior liquid and the metal layer that is connected to ground.

The voltage is increased to a maximum voltage, which may be in the range of 1 to 20 kilovolts. If the maximum voltage is reached without detection of a dielectric breakdown, this indicates that the package is intact and that the thickness of the polymer layer corresponds to a breakdown voltage greater than the maximum voltage applied during the test.

In an optional *classify* step 48, the testing device 1 classifies the package 10 into one of a predetermined number of classes based on the current samples and, when available, the voltage samples. Optionally, the classification is based on providing the measured current and, when available, the dielectric breakdown voltage to a pre-trained machine-learning model 7. The predetermined number of classes may include a first class for indicating a leak, a second class for indicating a valid dielectric breakdown voltage, and a third class for indicating an operator error. The operator error can, for instance, be that the interior and/or exterior liquid level is too high, allowing electric contact or breakdown between the interior and exterior of the package through liquid and/or air.

Prior to use, the machine-learning model 7 can be trained using a labelled training dataset comprising historical test results from packages with known conditions. The training data may include current profiles and, when applicable, voltage profiles from packages known to be intact, packages intentionally damaged to simulate leaks, and packages subjected to improper testing conditions. Each training example is associated with a classification label corresponding to one of the predetermined classes. The input features to the machine-learning model may include measured current values during the initial low-voltage application, measured voltage values during the ramped voltage application, the timing of a breakdown event, and statistical or derived features such as mean, variance, or stability of the signals. Training can be performed using a supervised learning technique, such as neural networks, decision trees, or support vector machines. Once trained, the machine-learning model 7 can automatically classify newly tested packages based on their measured electrical response, improving objectivity and reducing dependence on operator judgement.

The result of the test can be stored in the testing device 1 or can be communicated over a communication network to another device, such as a server.

Steps 40, 42 form part of first stage of testing, where a voltage is applied and the resulting current is measured. Step 46 forms part of a second stage of testing, where a ramping voltage is applied. Steps 44 and 45 do not take much time and can be considered to be performed between the first stage and the second stage. Step 48 can be performed after the second stage, based on data from both the first stage and the second stage.

Embodiments presented herein offer several advantages over existing RHV evaluation methods. The system provides very high sensitivity in distinguishing between electrical contact and no-contact conditions, enabling more reliable detection of package defects. A consistent testing specification can be applied across different packaging materials. Furthermore, raw data for current and voltage, and corresponding curves, are stored during each test cycle, allowing for future review and re-evaluation if necessary. The analysis process is performed by the testing device 1 (AI-driven or rule-based) without any need for evaluation of the voltage or current curves by an operator, substantially reducing the need for operator judgement and thereby enhancing the objectivity, repeatability, and reliability of the test outcomes.

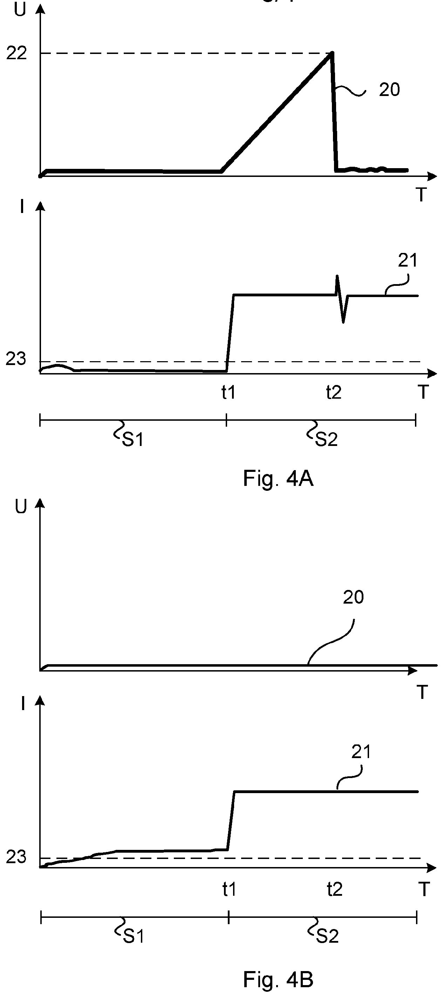

Figs 4A-C are time-based signal diagrams illustrating voltage and current curves during three separate instances of testing a package 10 using embodiments of methods described in connection with Fig 3, described above. In all of Figs 4A-C, the upper graph shows the voltage (U) applied between the first electrode 2 and the second electrode 3, over time T, while the lower graph shows the corresponding measured current (I) over the same time period. The testing sequence is divided into a first stage S1, during which a low voltage is applied to detect leakage, and a second stage S2, in which a ramped voltage may be applied to determine a dielectric breakdown voltage.

In Fig 4A, the voltage signal 20 remains at a low, essentially constant level during the first stage S1, and then increases linearly, from time t1, during the second stage S2. A breakdown (through the polymer layer) occurs at time t2, when a breakdown voltage 22 is detected, followed by a rapid collapse in the applied voltage since there is now a conductive path between the first electrode and the second electrode. The corresponding current signal 21 is initially low during the first stage S1, below a threshold current, indicating that there is no leak. The current 21 then increases at time t1 to a steady value during the second stage S2, and exhibits a transient spike at time t2, when the breakdown occurs. This example corresponds to an intact package 10 as illustrated by Fig 2A, when the current during stage S1 remains low during the first stage, and a valid dielectric breakdown voltage 22 is successfully determined during the second stage S2.

In Fig 4B, the voltage signal 20 remains constant at the initial low level throughout both the first stage S1 and the second stage S2. The current signal 21 rises to a relatively high level during the first stage and remains at a relatively high level, indicating the presence of continuous conduction through the package wall. In this case, the measured current during the first stage S1 exceeds the threshold current 23, and the package 10 is determined to be leaking. If the voltage ramp during the second stage S2 is performed, no significant change is seen in the voltage curve 20, while the current 21 increases. Optionally, when the leakage is detected, the second stage S2 can be skipped.

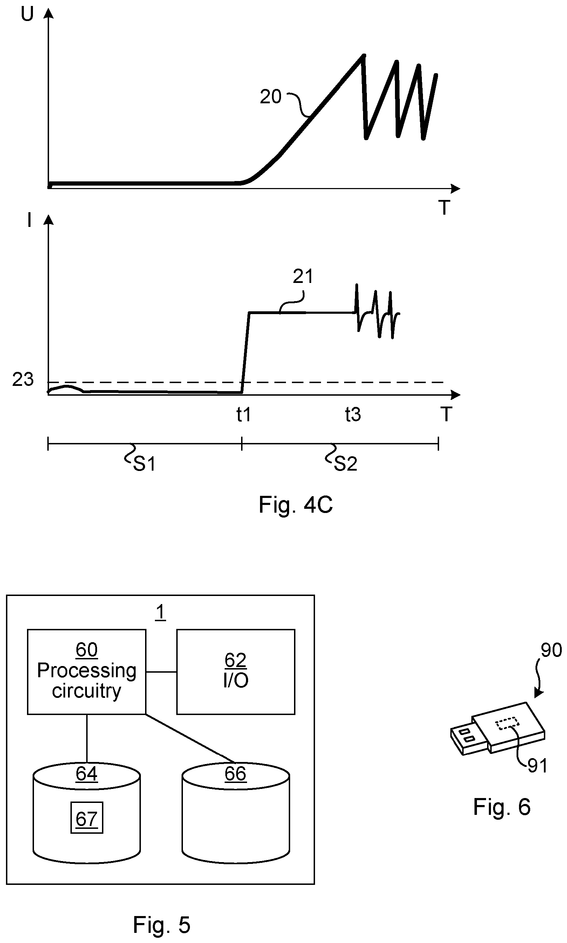

Fig 4C is a time-based signal diagram showing an example of an unstable or invalid measurement condition that may arise during package 10 testing using the method described in Fig 3.

In the example of Fig 4C, the current 21 during the first stage S1 remains below the threshold current 23, and so the testing device 1 proceeds to apply a ramped voltage in the second stage S2. However, instead of reaching a clear breakdown point as in Fig 4A, at time t3, the voltage signal 20 becomes unstable and exhibits oscillations or noise at higher voltage levels. The corresponding current signal 21 also becomes erratic during S2.

This behaviour may result from unintended electrical breakdown in the air or liquid layer between the interior and exterior liquids of the package 10, for example due to misalignment of electrodes, surface contamination, or overfilled liquids in the interior and/or exterior of the package 10. Such parasitic breakdown paths can lead to spurious or invalid measurements, making it difficult to determine a meaningful breakdown voltage or reliably assess integrity of the package 10.

In some embodiments, the testing device 1 may detect this oscillatory or unstable signal pattern and classify the test as a failure or operator error, for example using the optional *classify* step 48 described in Fig 3. This allows the system to distinguish true leaks or breakdown events from artifacts caused by improper test setup or environmental interference.

These curves 20, 21 illustrate how embodiments presented herein enable efficient and automated detection of package leaks via current thresholding in the first stage, and conditionally proceeds to determine a dielectric breakdown voltage 22 for intact packages.

The measured voltage and current signals illustrated in Figures 4A to 4C may be provided as input to the machine learning model 7 described above. The machine learning model 7 may be pre-trained using a labelled dataset of historical testing results, where each example comprises full voltage and current curves corresponding to known package conditions. For example, a current signal 21 that remains below the threshold current during the first stage S1, followed by a clear breakdown voltage 22 during the second stage S2, as illustrated in Figure 4A, occurs for an intact package, and is thus labelled accordingly. A current signal 21 that exceeds the threshold current 23 during the first stage S1, as shown in Figure 4B, occurs for a leaking package and is thus labelled as such. An unstable or oscillatory voltage and current response during the second stage S2, as illustrated in Figure 4C, occurs during an operator error or invalid test and is labelled as such.

The input features provided to the machine learning model 7 may include time-series data representing the current curve and, when available, the voltage curve recorded during the test. Once trained, the machine learning model 7 enables the testing device 1 to automatically classify newly tested packages based on their recorded electrical response, thus enhancing the objectivity, repeatability, and efficiency of the package integrity testing process.

In some embodiments, classification of the package 10 may alternatively be performed using a rule-based approach, without relying on the machine learning model 7. In such embodiments, predefined thresholds, conditions, and logical rules are applied directly to the measured current and voltage signals to assign the package to a class. For example, if the measured current during the first stage S1 exceeds the threshold current 23, the package may be classified as leaking; if the current remains below the threshold and a valid breakdown voltage 22 is detected during the second stage S2, the package may be classified as intact; and if unstable or oscillatory behaviour is detected during the second stage S2, the package may be classified as a test error or operator error. Such rule-based classification enables straightforward implementation and may be suitable for systems where machine learning techniques are not required or where computational simplicity is desired.

Fig 5 is a schematic diagram illustrating components of the testing device 1 of Fig 1. Processing circuitry 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in memory circuitry 64, which can thus be a computer program product. The processing circuitry 60 could alternatively be implemented using an application specific integrated circuit (ASIC), field programmable gate array (FPGA), etc. The processing circuitry 60 can be configured to execute the method described with reference to Fig 3 above.

The memory circuitry 64 can be any combination of random-access memory (RAM) and/or read-only memory (ROM). The memory circuitry 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processing circuitry 60. The data memory 66 can be any combination of RAM and/or ROM.

The testing device 1 further comprises an I/O interface 62 for communicating with external and/or internal entities. The I/O interface 62 can comprise analogue-to-digital converters for converting a measured voltage and current to digital values.

Other components of the testing device 1 are omitted in order not to obscure the concepts presented herein.

Fig 6 shows one example of a computer program product 90 comprising computer readable means. On this computer readable means, a computer program 91 can be stored in a non-transitory memory. The computer program can cause processing circuitry to execute a method according to embodiments described herein. In this example, the computer program product 90 is in the form of a removable solid-state memory, e.g. a Universal Serial Bus (USB) drive. As explained above, the computer program product could also be embodied in a memory of a device, such as the computer program product 64 of Fig 5. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for testing a liquid food package (10), the method being performed by a testing device (1), the method comprising:
applying (40) a first voltage between a first electrode (2) and a second electrode (3), wherein the first electrode (2) is in conductive contact with an interior side (17) of the package (10) and the second electrode (6) is in conductive contact with an exterior side (18) of the package (10);
measuring (42) a current based on applying the first voltage;
determining (44), in response to measured current being greater than a threshold current, that the package is leaking; and
applying (46), in response to measured current being less than the threshold current, a successively increasing voltage between the first electrode (2) and the second electrode (3) for determining a dielectric breakdown voltage at which the package (10) fails.

2. The method according to claim 1, wherein the first electrode (2) is in conductive contact with a liquid (5) on an interior side of, and in contact with, the package (10) and the second electrode (6) is in conductive contact with a liquid (6) on an exterior side of, and in contact with, the package (10).

3. The method according to claim 1 or 2, wherein the measuring (42) the current comprises storing a plurality of current samples over time, and wherein the applying (46) a successively increasing voltage comprises storing a plurality of measured voltage samples over time.

4. The method according to claim 3, further comprising:
classifying (48) the package (10) into one of a predetermined number of classes based on the current samples and, when available, the voltage samples.

5. The method according to claim 4, wherein the classifying (48) comprises classifying based on providing the measured current and, when available, the dielectric breakdown voltage to a pre-trained machine-learning model (7).

6. The method according to claim 4 or 5, wherein the predetermined number of classes comprises a first class for indicating a leak, a second class for indicating a valid dielectric breakdown voltage, and a third class for indicating an operator error.

7. The method according to any one of the preceding claims, wherein the applying (40) a first voltage is performed for a predetermined duration before performing the measuring (42) the current.

8. The method according to any one of the preceding claims, wherein the package (10) includes a multi-layer structure, and the dielectric breakdown voltage is used to estimate thickness or integrity of at least one polymer layer in the multi-layer polymeric structure.

9. A testing device (1) for testing a package (10), the testing device (1) comprising:
processing circuitry (60); and
memory circuitry (64) storing instructions (67) that, when executed by the processing circuitry, cause the testing device (1) to:
apply a first voltage between a first electrode (2) and a second electrode (3), when the first electrode (2) is configured to be in conductive contact with an interior side of the package (10) and the second electrode (6) is configured to be in conductive contact with an exterior side of the package (10);
measure a current based on applying the first voltage;
determine, in response to measured current being greater than a threshold current, that the package is leaking; and
apply, in response to measured current being less than the threshold current, a successively increasing voltage between the first electrode (2) and the second electrode (3) for determining a dielectric breakdown voltage at which the package (10) fails.

10. The testing device (1) according to claim 9, wherein the first electrode (2) is configured to be in conductive contact with a liquid (5) on an interior side of, and in contact with, the package (10) and the second electrode (6) is configured to be in conductive contact with a liquid (6) on an exterior side of, and in contact with, the package (10).

11. The testing device (1) according to claim 9 or 10, wherein the instructions to measure the current comprise instructions (67) that, when executed by the processing circuitry, cause the testing device (1) to store a plurality of current samples over time, and wherein the instructions to apply a successively increasing voltage comprise instructions (67) that, when executed by the processing circuitry, cause the testing device (1) to store a plurality of measured voltage samples over time.

12. The testing device (1) according to claim 11, further comprising instructions (67) that, when executed by the processing circuitry, cause the testing device (1) to:
classify the package (10) into one of a predetermined number of classes based on the current samples and, when available, the voltage samples.

13. The testing device (1) according to claim 12, wherein the instructions to classify comprise instructions (67) that, when executed by the processing circuitry, cause the testing device (1) to classify based on providing the measured current and, when available, the dielectric breakdown voltage to a pre-trained machine-learning model (7).

14. The testing device (1) according to claim 12 or 13, wherein the predetermined number of classes comprises a first class for indicating a leak, a second class for indicating a valid dielectric breakdown voltage, and a third class for indicating an operator error.

15. A computer program (67, 91) for testing a package (10), the computer program comprising computer program code which, when executed on a testing device (1) causes the testing device (1) to:
apply a first voltage between a first electrode (2) and a second electrode (3), when the first electrode (2) is in conductive contact with an interior side of the package (10) and the second electrode (6) is in conductive contact with an exterior side of the package (10);
measure a current based on applying the first voltage;
determine, in response to measured current being greater than a threshold current, that the package is leaking; and
apply, in response to measured current being less than the threshold current, a successively increasing voltage between the first electrode (2) and the second electrode (3) for determining a dielectric breakdown voltage at which the package (10) fails.

16. A computer program product (64, 90) comprising a computer program according to claim 15 and a computer readable means comprising non-transitory memory in which the computer program is stored.
